# EUROPÄISCHE PATENTANMELDUNG

(11) **EP 1 848 104 A2**
(43) Veröffentlichungstag der Anmeldung: **24.10.2007**
(21) Anmeldenummer: 07106002.4
(22) Anmeldetag: 12.04.2007
(51) Int. Cl.: H02P 9/42

(54) **Kraft-Wärme-Kopplungs-Anordnung und Verfahren zur Steuerung einer solchen Anordnung**

(30) Priorität: 19.04.2006 DE 102006018458
(71) Anmelder: Sailer, Roland, 89601 Schelklingen (DE); Sailer, Wolfgang, 89601 Schelklingen (DE); Zieger, Michael, 85244 Röhrmoos (DE)
(72) Erfinder: Sailer, Roland, 89601 Schelklingen (DE); Sailer, Wolfgang, 89601 Schelklingen (DE); Zieger, Michael, 85244 Röhrmoos (DE)
(74) Vertreter: Weber, Gerhard

(57) **Zusammenfassung**

Für eine Kraftwärme-Kopplungs-Anordnung mit einem Verbrennungsmotor, dessen Verlustwärmeleistung in einen Nutzwärmekreis abgeführt wird, und einen von dem Verbrennungsmotor angetriebenen Stromgenerator, welcher eine elektrische Ausgangsleistung vorgegebener Frequenz zur Einspeisung in ein Wechselstromnetz erzeugt, wird vorgeschlagen, zur verbesserten Anpassung der Verlustwärmeleistung des Verbrennungsmotors bei dem Generator eine Polumschaltung vorzusehen und hierdurch wenigstens zwei Verlustwärmeleistungsstufen beim Betrieb des Verbrennungsmotors einzurichten. Insbesondere in Situationen, in welchen der Wärmebedarf im Nutzwärmekreis zwischen den beiden Verlustleistungsstufen des Verbrennungsmotors liegt, ergibt sich vorteilhaft die Möglichkeit, die mittlere Verlustwärmeleistung des Verbrennungsmotors auf Zwischenwerte zu regulieren, ohne den Verbrennungsmotor abwechselnd einzuschalten und auszuschalten.

## Beschreibung

Die Erfindung betrifft eine Kraft-Wärme-Kopplungs-Anordnung mit einem Verbrennungsmotor und einem von diesem angetriebenen Generator, sowie ein Verfahren zur Steuerung einer solchen Anordnung.

Derartige Kraft-Wärme-Kopplungs-Anordnungen sind insbesondere vorteilhaft zur gleichzeitigen Gewinnung von Strom und Nutzwärme in BlockHeizkraftwerken. Dabei sind Anordnungen bevorzugt, bei welchen der Verbrennungsmotor über einen Regelkreis so gesteuert ist, dass der Ausgangsstrom des Generators in Frequenz und Phase an ein Wechselspannungsnetz, typischerweise das gebräuchliche Stromnetz mit 50 Hz Netzfrequenz angebunden ist und zur Einspeisung der Generatorleistung in das Netz keine aufwendigen und verlustbehafteten Umrichteranordnungen erforderlich sind. Insbesondere kann der Verbrennungsmotor mit 3000 U/min betrieben werden, um einen Generator-Ausgangsstrom mit einer Frequenz von 50 Hz zu erzeugen.

Die Verlustwärme des Verbrennungsmotors einschließlich der Wärme der Abgase können vorteilhafterweise als Nutzwärme in einen Nutzwärmekreislauf, insbesondere einen Heizkreislauf eingespeist werden. Ein Wärmepufferspeicher kann zum Ausgleich kurzfristiger Schwankungen von Wärmeangebot und Wärmebedarf im Nutzwärmekreis vorhanden sein. Einrichtungen sowohl zur Gewinnung der Nutzwärme als auch der elektrischen Nutzenergie in solchen Kraft-Wärme-Kopplungs-Anlagen sind allgemein bekannt und gebräuchlich.

Eine wesentliche Eigenschaft von solchen Blockheizkraftwerken ist die Verwendung der Nutzwärme im näheren Umfeld der Anlage, so dass der Wärmebedarf im versorgten Umfeld einen wesentlichen Parameter für die Dimensionierung der Anlage darstellt. Der Wärmebedarf ist aber häufig starken Schwankungen sowohl tageszeitlich als insbesondere auch jahreszeitlich unterworfen. Um bei maximalem Wärmebedarf (als entnommene Wärmeleistung) möglichst wenig zusätzliche Heizleistung vorsehen zu müssen, sind die Anlagen typischerweise so auf das zu versorgende Umfeld abgestimmt, dass die Verlustwärmeleistung des Motors nur wenig unterhalb des maximal zu erwartenden Wärmebedarfs liegt. Bei geringem Wärmebedarf wird bei den auf den hohen Wärmebedarf ausgelegten Anlagen daher der Verbrennungsmotor häufig ein- und ausgeschaltet, was aber als Betriebsart für den Verbrennungsmotor ungünstig ist.

Der Erfindung liegt die Aufgabe zugrunde, die bekannten Kraft-Wärme-Kopplungs-Anordnungen weiter zu verbessern.

Erfindungsgemäße Lösungen sind den unabhängigen Ansprüchen entnehmbar. Die abhängigen Ansprüche enthalten vorteilhafte Ausgestaltungen und Weiterbildungen der Erfindung.

Durch die erfindungsgemäße Polumschaltung des Stromgenerators und die korrespondierende Steuerung des Antriebsmotors zur Einhaltung der vorgegebenen Frequenz des Ausgangsstroms des Stromgenerators lässt sich vorteilhafterweise die Leistung des Verbrennungsmotors und dadurch auch dessen Verlustwärmeleistung stufenweise reduzieren und an die aktuelle Wärmebedarfsleistung der versorgten Umgebung anpassen.

In bevorzugter einfacher Ausführung beträgt das Verhältnis der Polzahlen zwischen den beiden Betriebsarten 2:1. Insbesondere kann vorgesehen sein, den Generator neben der gebräuchlichen 2-poligen Betriebsart durch Polumschaltung auch in einer zweiten 4-poligen Betriebsart betreibbar zu machen und entsprechend der Verdopplung der Polzahl die Drehzahl zu halbieren.

Die Technik der Polumschaltung für Stromgeneratoren ist an sich bekannt und z. B. bei Generatoren in Windkraftanlagen eingesetzt, um auch bei geringer Windstärke einen Anlagenbetrieb zu ermöglichen. Demgegenüber steht bei einer Kraft-Wärme-Kopplungs-Anordnung immer ausreichend Antriebskraft zur Verfügung, so dass die Problemstellungen nicht vergleichbar sind.

Die Erfindung senkt durch die Polumschaltung zu höherer Polzahl und die damit verbundene Reduzierung der Motordrehzahl die Verlustwärmeleistung der Anlage in der einen Betriebsart gegenüber der möglichen Verlustwärmeleistung gezielt ab. Die elektrische Ausgangsleistung wird dabei in ähnlichem Maße reduziert. Diese nach erstem Augenschein dem wesentlichen Ziel einer hohen Ausgangsleistung widersprechende Maßnahme hat aber überraschend den wesentlichen Vorteil, dass ohne größere Änderungen an der Anlage diese flexibler an den schwankenden tatsächlichen Bedarf im Nutzwärmekreis anpassbar ist. Die elektrische Leistung wird dabei unverändert zur Erzielung eines hohen Gesamtwirkunsgrads mit erzeugt. Durch die einfache Verteilung elektrischer Leistung in einem Stromnetz ist die erzeugte elektrische Leistung aber kein den Betrieb der Kraft-Wärme-Kopplungs-Anordnung maßgeblich bestimmender Parameter.

Die Polumschaltung ermöglicht vorteilhafterweise den Betrieb des Verbrennungsmotors bei verschiedenen Drehzahlen und damit auf verschiedenen Stufen der Verlustwärmeleistung ohne Umschaltgetriebe und insbesondere mit direkter Kopplung von Motorwelle und Generatorwelle in der an sich bei Anlagen mit nur einer Betriebsdrehzahl des Verbrennungsmotors gebräuchlichen Konstruktion. Die Polumschaltung erfordert daher keine größeren Eingriffe in bestehende und bewährte Anlagenkonzepte. Im wesentlichen ist die Möglichkeit der Polumschaltung einzurichten und bei der Steuerung der Anordnung die Polumschaltbarkeit zu berücksichtigen. Für die Motorsteuerung sind typischerweise die vorhandenen Regeleinrichtungen weiter verwendbar.

Die Polumschaltung ist insbesondere auch bei laufendem Generator und Verbrennungsmotor möglich, wobei kurzzeitig bis zur Neueinregelung von Frequenz und Phase des Generatorausgangs der Generator vom Stromnetz getrennt wird.

Insbesondere bei einem zwischen den Verlustleistungsstufen der verschiedenen Betriebsdrehzahlen des Verbrennungsmotors liegenden Wärmebedarf im Nutzwärmekreis kann vorteilhafterweise bei weiter laufendem Motor durch Umschaltung der Polzahl des Generators und entsprechender Änderung der Motordrehzahl eine dem tatsächlichen Wärmebedarf angepasste gemittelte Verlustwärmeleistung erzeugt werden.

Die verringerte Drehzahl des Verbrennungsmotors wirkt sich zudem günstig auf Wartungsintervalle und Lebensdauer des Motors in typischer Ausführung als Ottomotor aus.

Die Erfindung ist nachfolgend anhand bevorzugter Ausführungsbeispiele noch eingehend veranschaulicht. Dabei zeigt:
- Fig. 1: Zeit-Wärmebedarfs-Diagramme,
- Fig. 2: einen schematischen Aufbau einer Kraft-Wärme-Kopplungs-Anordnung,
- Fig. 3: eine vorteilhafte Anordnung zur Kraftstoffvorwärmung,
- Fig. 4: eine vorteilhafte Anordnung zur zusätzlichen Wärmegewinnung,
- Fig. 5: eine vorteilhafte Abgas-Wärmetauscher-Vorrichtung.

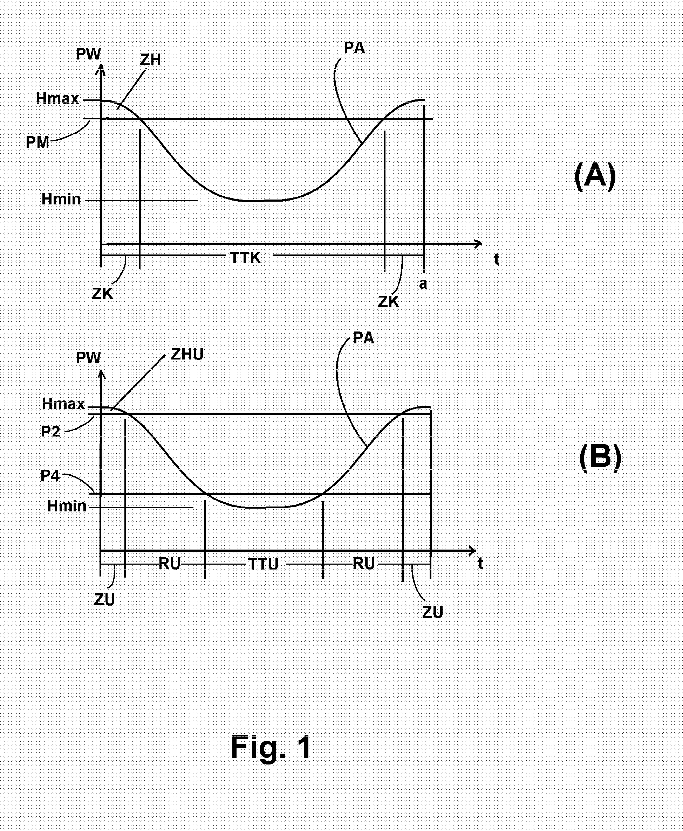

Fig. 1 zeigt schematisch in zwei gleichen Diagrammen Wärmeleistungen PW, wobei insbesondere ein über der Zeit t im Verlauf eines Jahres a variierender Wärmeleistungsbedarf PA in einem Nutzwärmekreis, insbesondere einem Heizungskreis eingetragen ist. Die Kurve ist nur schematisch zu verstehen. Der Wärmebedarf schwanke zwischen einem maximalen Bedarf Hmax, beispielsweise im Winter, und einem minimalen Wärmebedarf Hmin, beispielsweise im Sommer. Der minimale Bedarf Hmin betrage im Beispiel ungefähr 30 % des maximalen Wärmebedarfs Hmax.

Herkömmliche Kraft-Wärme-Kopplungs-Anordnungen sind bezüglich des maximal zu erwartenden Wärmebedarfs Hmax und der Verlustwärmeleistung PM des Verbrennungsmotors typischerweise so ausgelegt, dass die Verlustwärmeleistung PM geringfügig, typischerweise weniger als 20 % unter dem maximalen Wärmebedarf Hmax liegt, um den Bedarf an zusätzlicher Heizleistung, repräsentiert durch die Flächen ZH, in Zeitabschnitten ZK mit erhöhtem Wärmebedarf möglichst gering zu halten. Dies hat andererseits zur Folge, dass der überwiegende Teil des Verlaufs der Wärmebedarfskurve PA unter dem Wert der Verlustwärmeleistung PM des Verbrennungsmotors liegt und der Verbrennungsmotor daher im Dauerbetrieb mehr Verlustwärme erzeugt als im Nutzwärmekreis benötigt wird. In der Zeitperiode TTK wird daher der Verbrennungsmotor in Abhängigkeit vom aktuellen Wärmebedarf PA (t) immer wieder ein und aus geschaltet. Dies betrifft, wie in Fig. 1 (A) schematisch dargestellt, den überwiegenden Zeitanteil eines Jahres.

Demgegenüber ist in Fig. 1 (B) mit gleicher Wärmebedarfskurve PA und gleichem minimalen und maximalen Wärmebedarf Hmax bzw. Hmin die Situation mit der erfindungsgemäßen Anordnung mit Polumschaltung dargestellt.

In einer ersten Betriebsart mit beispielsweise zweipoliger Betriebsart des Generators weise der Verbrennungsmotor eine Verlustwärmeleistung P2 auf, welche wiederum in der Nähe des maximalen Wärmebedarfs Hmax liege. Wesentlich ist, dass durch Polumschaltung des Generators vom zweipoligen Betrieb auf den vierpoligen Betrieb und entsprechender Reduzierung der Drehzahl des Verbrennungsmotors von zuvor beispielsweise 3.000 U/min auf dann nur noch 1.500 U/min eine stark verringerte Verlustwärmeleistung P4 aufweist. Typischerweise ist bei Dieselmotoren die Effizienz in diesem Drehzahlbereich auch günstiger als bei einer Drehzahl von 3.000 U/min, so dass die Verlustwärmeleistung P4 in der Regel weniger als 50 % der Verlustleistung P2 bei 3.000 U/min und zweipoligem Betrieb des Generators beträgt. In Fig. 1 (B) ist beispielsweise ein Verhältnis P4 zu P2 gleich 0,4 angenommen.

Wesentlicher Vorteil mit der Möglichkeit der Polumschaltung des Generators und der Drehzahlanpassung des Verbrennungsmotors ist nach Fig. 1 (B), dass zum einen die Zeitperiode TTU, innerhalb welcher eine Anpassung der im Mittel abgegebenen Verlustwärmeleistung des Verbrennungsmotors an den tatsächlichen Wärmebedarf im Nutzwärmekreis das Ein- und Ausschalten des Motors erfordert, auf einen wesentlich kürzeren Jahreszeitabschnitt beschränkt ist, und dass ferner in Übergangszeiträumen RU, in welchen der tatsächliche Wärmebedarf PA zwischen der höheren Verlustwärmeleistungsstufe P2 und der niedrigeren Verlustwärmeleistungsstufe P4 verläuft, eine einfache und gute Anpassung der mittleren Verlustwärmeleistung des Verbrennungsmotors allein durch Polumschaltung und Drehzahlanpassung zwischen zweipoliger Betriebsart des Generators und 3.000 U/min des Verbrennungsmotors einerseits und vierpoliger Betriebsart und 1.500 U/min andererseits vorgenommen werden kann.

In Fig. 1 (B) sind weiterhin Flächen ZHU vorgesehen, welche wiederum den Umfang einer zusätzlich erforderlichen Heizleistung im Nutzwärmekreis repräsentieren. Es ist offensichtlich, dass die obere Verlustwärmeleistungsstufe P2 auch weiter angehoben werden und das Erfordernis einer zusätzlichen Wärmezufuhr in den Nutzwärmekreis gänzlich vermieden werden könnte, wobei dann die mit angehobene untere Verlustwärmeleistungsstufe P4 zu einer Verlängerung des Jahreszeitabschnittes TTU mit Ein-Aus-Taktung des Verbrennungsmotors vergrößert wird.

In bevorzugter Ausführung sind mehrere Kraft-Wärme-Kopplungs-Anordnungen bezüglich ihrer Nutzwärmekreise vernetzt, wodurch die flexible Betriebsweise der Polumschaltbarkeit weitere Vorteile bringt.

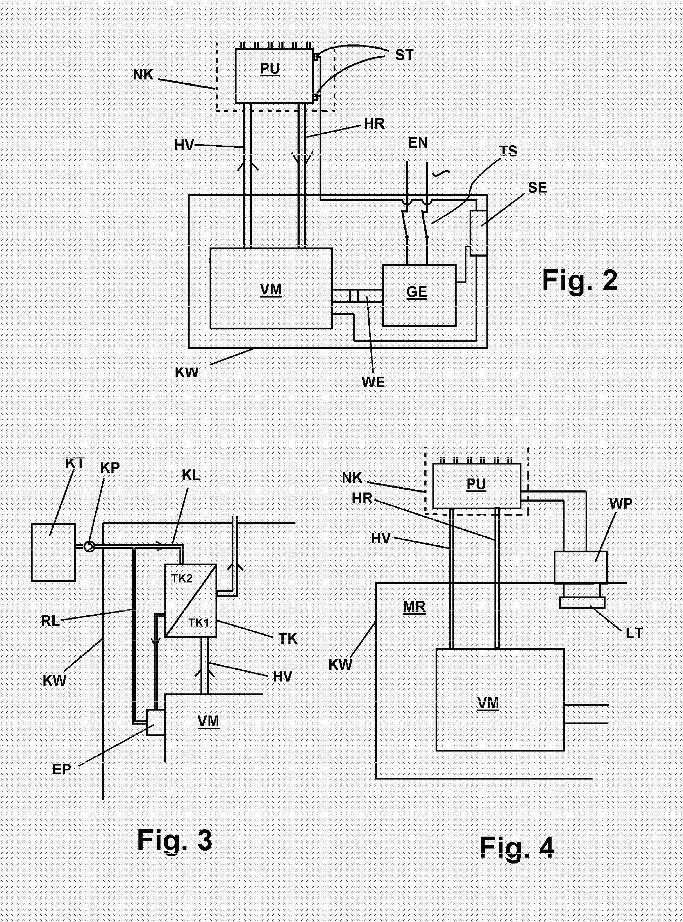

Fig. 2 zeigt schematisch den an sich gebräuchlichen Aufbau einer Kraft-Wärme-Kopplungs-Anordnung, bei welcher in einem typischerweise schallgedämmten und wärmegedämmten Anlagenraum KW ein Verbrennungsmotor VM und ein Stromgenerator GE angeordnet sind, welche über eine Welle WE gekoppelt sind. Die im Verbrennungsmotor VM im Betrieb entstehende Verlustwärme wird in einen Nutzwärmekreis NK mit einer Vorlaufleitung HV und einer Rücklaufleitung HR abgeführt. Der Nutzwärmekreis sei im skizzierten Beispiel schematisch repräsentiert durch einen Pufferwärmespeicher PU, welcher kurzzeitige, eventuell auch tageszeitliche Schwankungen der Wärmeentnahmeleistung angeschlossener Verbraucher einerseits und des Verbrennungsmotors VM im getakteten Betrieb andererseits glättet. Der für die Kraft-Wärme-Kopplungs-Anordnung in Erscheinung tretende Wärmebedarf ist dann in erster Linie der Bedarf zur Stabilisierung der Temperatur im Pufferspeicher PU innerhalb eines vorgebbaren Temperaturbereichs. Zur Steuerung der Anordnung ist eine Steuereinrichtung SE vorgesehen, welche beispielsweise den Wärmebedarf im Nutzwärmekreis durch Detektieren der Temperatur im Pufferspeicher über eine Temperatursensoranordnung ST bestimmt. Der Pufferspeicher ist vorzugsweise ein sogenannter Schichtspeicher, in welchem erwärmte Speicherflüssigkeit über eine Schichtrohranordnung mit einer Mehrzahl vertikal beabstandeter seitlicher Öffnungen verwirbelungsarm eingespeichert wird. Derartige Speicher sind allgemein bekannt und gebräuchlich. Die Temperatursensoranordnung enthält dabei vorteilhafterweise wenigstens zwei vertikal beabstandete Einzelsensoren an oder in dem Pufferspeicher. Der in Fig. 2 nur schematisch angedeutete Nutzwärmekreis kann auf an sich beliebige und bekannte Weise aufgebaut sein und insbesondere auch den Pufferspeicher umgehende Bypass-Kreise, Ventile, Zweigleitungen, Wärmetauscher usw. enthalten. Die Temperatursensoranordnung kann auch einen Sensor an der Rückleitung HR aus dem Nutzwärmekreis NK enthalten.

Während bei dem gebräuchlichen Betrieb mit konstanter Polzahl des Generators bei Überschreitung eines oberen Schwellwerts der Rücklauftemperatur der Verbrennungsmotor ausgeschaltet und bei Unterschreitung eines unteren Schwellwerts der Rücklauftemperatur der Verbrennungsmotor eingeschaltet wird oder eine zusätzliche Wärmezufuhr zum Nutzwärmekreis nötig wird, ergibt sich bei der erfindungsgemäßen Anordnung mit der Polumschaltung vorteilhafterweise die Möglichkeit, in Zeitabschnitten RU nach Fig. 1 (B) mit mittlerem Wärmebedarf im Nutzwärmekreis den Generator GE zwischen zwei Betriebsarten mit unterschiedlicher Polzahl zu betreiben und entsprechend die Drehzahl des Verbrennungsmotors VM und damit dessen Verlustwärmeleistung zwischen den beiden Verlustwärmeleistungsstufen P2 und P4 nach Fig. 1 (B) umzuschalten.

Die Steuereinrichtung SE braucht gegenüber gebräuchlichen Anordnungen ohne Polumschaltung nur geringfügig modifiziert werden. Für die Erfassung des aktuellen Wärmebedarfs im Nutzwärmekreis NK kann beispielsweise weiter differenzierte Temperaturauswertung vorgesehen sein. Insbesondere kann in dem mittleren Bereich mit einem zwischen P2 und P4 liegenden Wärmebedarf im Nutzwärmekreis die gebräuchliche Steuerung im wesentlichen unverändert übernommen werden. In bevorzugter Ausführung wird ein davon abweichender geringerer Wärmebedarf durch eine Zeitauswertung in der Steuereinrichtung berücksichtigt, indem z. B. bei stillstehendem Motor und Unterschreiten eines Temperaturschwellwerts an einem unteren Sensor der Temperatursensoranordnung der Motor mit der niedrigeren Drehzahl gestartet und für den Fall, dass nach einer vorgebbaren zeit von z. B. 10 Minuten eine Mindesttemperatur an dem oberen Temperatursensor der Temperatursensoranordnung nicht erreicht ist, auf die höhere Motordrehzahl umgeschaltet wird.

Sowohl bei der gebräuchlichen Betriebsart mit gleichbleibender Polzahl als auch bei der erfindungsgemäßen Umschaltbarkeit der Polzahl wird jeweils bei einer Änderung der Drehzahl des Verbrennungsmotors, worunter auch ein Ausschalten oder Einschalten verstanden sei, der Generator über Trennschalter TS vom Wechselstromnetz EN getrennt, bis Frequenz und Phase des Generatorausgangs in zur Einspeisung elektrischer Leitung in das Wechselstromnetz geeigneter Frequenz und Phase eingeregelt sind. Die Vorrichtungen und Steuerungsroutinen hierfür sind aus gebräuchlichen Anlagen hinreichend bekannt und daher an dieser Stelle nicht näher beschrieben.

In Fig. 3 ist eine Anordnung skizziert, welche insbesondere bei Verwendung von pflanzlichen Ölen als Kraftstoff eines Dieselmotors als Verbrennungsmotor vorteilhaft ist. Solche pflanzlichen Kraftstoffe weisen in der Regel eine höhere Viskosität auf als der handelsübliche Dieselkraftstoff. Es ist daher günstig, solche pflanzlichen Kraftstoffe zur Verringerung deren Viskosität vor der Zuführung zu einer Einspritzpumpe EP aufzuwärmen, wofür bei der in Fig. 3 skizzierten Anordnung die Vorlaufleitung HV des Nutzwärmekreises oder ein Bypass zu dieser Vorlaufleitung zu einer solchen Vorlaufleitung über die Primärseite TK1 eines Wärmetauschers TK geführt ist, durch dessen Sekundärseite TK2 der pflanzliche Kraftstoff aus einem Kraftstoffbehälter KT über eine Kraftstoffleitung KL zugeführt ist. Der im Wärmetauscher TK vorerwärmte Kraftstoff ist der Einspritzpumpe EP zugeleitet. Zur Förderung des Kraftstoffs aus dem Tank kann eine Kraftstoffpumpe KP vorgesehen sein.

In weiterer Verbesserung kann vorgesehen sein, das bei Einspritzpumpen anfallende Lecköl über ein Rückleitung RL der Kraftstoffleitung KL vor der Sekundärseite des Wärmetauschers zuzuleiten.

Fig. 4 zeigt eine vorteilhafte Anordnung zur zusätzlichen Gewinnung von Wärmeleistung aus der Kraft-Wärme-Kopplungs-Anordnung KW. Hierbei wird ausgenutzt, dass sich innerhalb des wärmegedämmten Raums der Anordnung eine erhöhte Lufttemperatur einstellt, welche für den Betrieb der Komponenten der Anordnung nicht erforderlich ist und trotz Wärmeisolierung des Raums durch dessen große Außenfläche Wärme an die Umgebung abgibt. Gemäß der Anordnung nach Fig. 4 ist vorteilhafterweise vorgesehen, der Raumluft innerhalb des Innenraums der Anordnung KW über eine Wärmepumpe WP und einen in das Innere reichenden Wärmetauscher LT weiter Wärme zu entziehen und dem Nutzwärmekreis zuzuführen. Die Wärmepumpe kann auch innerhalb des Raumes mit Verbrennungsmotor und Generator angeordnet sein.

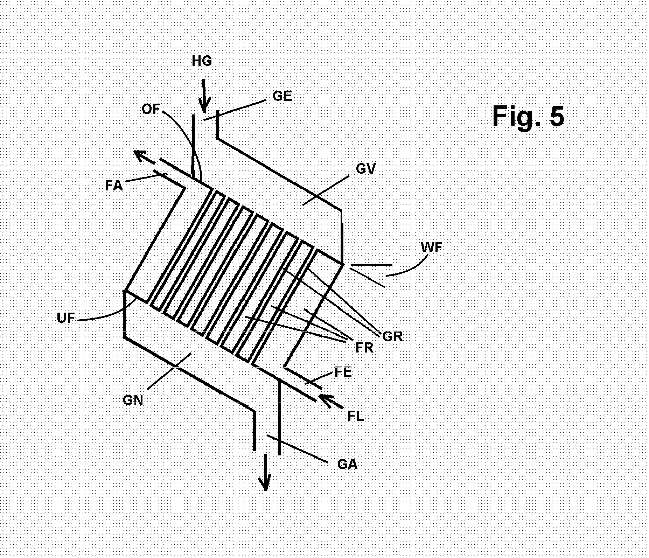

Fig. 5 zeigt eine vorteilhafte Ausführung einer Wärmetauscheranordnung zur Ausnutzung der in den heißen Abgasen des Verbrennungsmotors enthaltenen Wärme. Eine solche Ausnützung ist an sich bekannt und gebräuchlich. Eine solche Wärmetauscheranordnung weist eine von dem Abgas durchströmte Primärseite und eine von einer Flüssigkeit, insbesondere Wasser, gegebenenfalls mit Zusätzen durchströmte Sekundärseite auf. Typischerweise ist ein Flüssigkeitsraum der Sekundärseite der Wärmetauscheranordnung mit einer Mehrzahl von Rohren als Teil der Primärseite durchsetzt, durch welche das heiße Abgas geleitet wird und Wärme an die Flüssigkeit im umgebenden Flüssigkeitsraum abgibt.

Im skizzierten Beispiel der Fig. 5 ist für die Sekundärseite der Wärmetauscheranordnung ein Flüssigkeitsraum FR vorgesehen, in welchen über einen Flüssigkeitseinlass FE eine Trägerflüssigkeit FL einströmt und über einen Flüssigkeitsauslass FA ausströmt. Die Trägerflüssigkeit durchläuft typischerweise einen Kreislauf.

Der Flüssigkeitsraum FR ist durch eine obere Fläche OF gegen einen Vorraum GV und durch eine untere Fläche UF gegen einen Ausgangsraum GN der Primärseite abgegrenzt. Eine Rohranordnung mit mehreren Rohren GR führt von dem Vorraum GV zu dem Ausgangsraum GN. Heißes Abgas HG ist über einen Gaseinlass GE in den Vorraum GV geführt und durchströmt von diesem aus die Rohre GR der Rohranordnung und gibt dabei Wärme an die Flüssigkeit FL im Flüssigkeitsraum FR ab. Beim Austritt aus den Rohren GR in den Ausgangsraum GN ist das Abgas stark abgekühlt und wird über einen Gasauslass GA ordnungsgemäss abgeführt.

Wesentlich bei der skizzierten erfindungsgemäßen Anordnung ist, dass die obere Begrenzungsfläche OF des Flüssigkeitsraums FR gegen die Horizontale geneigt ist und in Richtung des Flüssigkeitsauslasses FA, welcher in vertikaler Richtung vorteilhafterweise höher liegt als die Öffnungen in der Fläche OF für die Rohre GR, ansteigt. Der Neigungswinkel WF, oder bei nicht ebener oberer Fläche OF der mittlere Neigungswinkel, liegt vorteilhafterweise bei wenigstens 10°, insbesondere bei wenigstens 20° und vorteilhafterweise bei höchstens 45°, insbesondere höchstens 30°.

Durch die geneigte Ausrichtung der oberen Begrenzungsfläche OF des Flüssigkeitsraums FR kann auf vorteilhafte Weise vermieden werden, dass sogenannte Dampfschläge durch lokales Überhitzen der Flüssigkeit FR insbesondere an den Durchtrittsstellen der Rohre GR durch die obere Fläche OF mit plötzlicher starker Dampfbildung auftreten. Die Gefahr hierfür ist durch die mehrere 100° erreichenden hohen Abgastemperaturen gegeben. Solche Dampfschlagbildungen können zu Beschädigungen der Wärmetauscheranordnung oder anderer Komponenten im Flüssigkeitskreislauf führen.

Die Rohre GR sind im skizzierten Beispiel gegen die Vertikale geneigt verlaufend, wobei eine überwiegend vertikale Abströmung der Abgase von der heißen Seite im Vorraum GV zur kalten Seite im Ausgangsraum GN vorteilhafterweise weiter gegeben ist. Die Neigung der Rohre GR gegen die Vertikale erlaubt vorteilhafterweise eine im wesentlichen zylindrische Ausführung des Flüssigkeitsraums FR. Die Rohre GR können selbstverständlich in anderer Ausführung auch steiler, insbesondere vertikal verlaufen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Kraft-Wärme-Kopplungs-Anordnung mit einem Verbrennungsmotor (VM) und einem von diesem mit konstanter Drehzahl angetriebenen Stromgenerator (GE), wobei Verlustwärme des Verbrennungsmotors als Nutzwärme in einen Nutzwärmekreis (HV, PU, HR) und elektrische Ausgangsleistung des Generators als elektrische Nutzleistung vorgegebener Frequenz in ein Wechselstromnetz (EN) abgegeben werden, **dadurch gekennzeichnet, dass** der Stromgenerator Mittel zur Polumschaltung aufweist und mittels dieser in wenigstens zwei Betriebsarten mit unterschiedlicher Polzahl betreibbar ist, und dass eine Steuereinrichtung (SE) je nach Betriebsart des Generators den Verbrennungsmotor auf verschiedene Drehzahl derart regelt, dass die Frequenz der elektrischen Ausgangsleistung des Stromgenerators in beiden Betriebsarten gleich der vorgegebenen Frequenz ist.

2. Anordnung nach Anspruch 1, **dadurch gekennzeichnet, dass** das Polzahlverhältnis zwischen den beiden Betriebsarten 2 : 1 beträgt.

3. Anordnung nach Anspruch 2, **dadurch gekennzeichnet, dass** der Generator zwischen 2-poliger und 4-poliger Betriebsart umschaltbar ist.

4. Anordnung nach einem der Ansprüche 1 bis 3, **dadurch gekennzeichnet, dass** Mittel (ST) zur Erfassung einer vom Nutzwärmebedarf abhängigen Größe vorgesehen und mit der Steuereinrichtung (SE) verbunden sind.

5. Anordnung nach Anspruch 4, **dadurch gekennzeichnet, dass** die genannten Mittel die Rücklauftemperatur des Nutzwärmekreises (NK) und/oder die Temperatur in einem Pufferspeicher (PU) erfassen.

6. Anordnung nach einem der Ansprüche 1 bis 5, **dadurch gekennzeichnet, dass** die Steuereinrichtung (SE) eine Betriebsart des Stromgenerators nach Maßgabe des Nutzwärmebedarfs einstellt.

7. Kraft-Wärme-Kopplungs-Anordnung, insbesondere nach Anspruch 1, mit einem Verbrennungsmotor (VM) und einem von diesem angetriebenen Stromgenerator (GE), wobei Verlustwärme des Verbrennungsmotors als Nutzwärme an einen Nutzwärmekreis (NK) und elektrische Ausgangsleistung des Generators als elektrische Nutzleistung abgegeben werden, wobei Verbrennungsmotor und Generator in einem im wesentlichen geschlossenen und wärmegedämmten Raum (MR) angeordnet sind, **dadurch gekennzeichnet, dass** eine Wärmepumpenanordnung (WP) vorgesehen ist, welche der Raumluft des Raums (MR) Wärme entzieht und als zusätzliche Nutzwärme in den Nutzwärmekreis transportiert.

8. Kraft-Wärme-Kopplungs-Anordnung, insbesondere nach Anspruch 1, mit einem Verbrennungsmotor und einem von diesem angetriebenen Stromgenerator, **dadurch gekennzeichnet, dass** dem Verbrennungsmotor (VM) über eine Einspritzpumpe (EP) ein pflanzliches Öl als Kraftstoff zugeführt ist und dass das Öl vor der Einspritzpumpe die Sekundärseite (TK2) eines Wärmetauschers (TK) durchläuft, dessen Primärseite (TK1) im Vorlauf (HV) eines Nutzwärmekreises (NK) liegt.

9. Kaft-Wärme-Kopplungs-Anordnung, insbesondere nach Anspruch 1, mit einem Verbrennungsmotor (VM) und einem von diesem angetriebenen Stromgenerator (GE), wobei die Abgase des Verbrennungsmotors (VM) einer Wärmetauscheranordnung zugeleitet sind, bei welcher ein Flüssigkeitsraum (FR) als Sekundärseite der Wärmetauscheranordnung eine obere Begrenzungsfläche (OF) und von dieser nach unten abgehende Durchleitungen (GR) für heiße Abgase als Primärseite der Wärmetauscheranordnung aufweist, **dadurch gekennzeichnet, dass** die obere Begrenzungsfläche (OF) gegen die Horizontale geneigt (WF) verläuft und zu einem höher als die Durchleitungen (GR) liegenden Strömungsausgang (FA) des sekundärseitigen Flüssigkeitskreislaufs ansteigt.

10. Verfahren zur Steuerung einer Kraft-Wärme-Kopplungs-Anordnung nach Anspruch 1, **dadurch gekennzeichnet, dass** in Abhängigkeit vom Wärmebedarf im Nutzwärmekreis durch Polumschaltung des Generators (GE) und Änderung der Drehzahl des Verbrennungsmotors (VM) zwischen zwei Betriebsarten mit gleicher Frequenz der elektrischen Ausgangsleistung des Generators, aber unterschiedlichen Stufen (P2, P4) der Verlustwärmeleistung des Verbrennungsmotors gewählt wird.

11. Verfahren nach Anspruch 10, **dadurch gekennzeichnet, dass** für einen zwischen den beiden Stufen (P2, P4) der Verlustwärmeleistung liegenden Wärmebedarf im Nutzwärmekreis eine abwechselnde Polumschaltung und Drehzahländerung bei weiter laufendem Motor und Generator vorgenommen wird.
